# EUROPÄISCHE PATENTANMELDUNG

(11) **EP 1 048 570 A2**
(43) Veröffentlichungstag der Anmeldung: **02.11.2000**
(21) Anmeldenummer: 00107728.8
(22) Anmeldetag: 11.04.2000
(51) Int. Cl.: B65B 43/52

(54) **Fördervorrichtung in einer Verpackungsmaschine**

(30) Priorität: 29.04.1999 DE 19919497
(71) Anmelder: IWK Verpackungstechnik GmbH, 76297 Stutensee-Blankenloch (DE)
(72) Erfinder: Christ Richard, 56281 Emmelshausen (DE)
(74) Vertreter: Lasch, Hartmut Dipl.-Ing.

(57) **Zusammenfassung**

Eine Fördervorrichtung in einer Verpackungsmaschine, insbesondere einer Tubenfüllmaschine, weist ein über zumindest zwei Umlenkrollen geführtes Endlosband auf, auf dessen Außenseite eine Vielzahl von Tragvorrichtungen angeordnet sind. Die Tragvorrichtungen sind an ihrem einen Ende jeweils über einen quer zur Längserstreckung des Endlosbandes verlaufenden Bolzen gelenkig am Endlosband gelagert und stehen an ihrem entgegengesetzten Ende mit der benachbarten Tragvorrichtung sowohl gelenkig als auch in Längsrichtung des Endlosbandes verschieblich in Eingriff. Um eine präzise Lagerung der Tragvorrichtung zu erreichen, ist diese mit der benachbarten Tragvorrichtung über zumindest eine Gelenklasche verbunden, die um eine erste Achse schwenkbar an der Tragvorrichtung und um eine dazu parallele zweite Achse schwenkbar an der benachbarten Tragvorrichtung angeschlossen ist.

## Beschreibung

Die Erfindung betrifft eine Fördervorrichtung in einer Verpackungsmaschine, insbesondere einer Tubenfüllmaschine, mit einem über zumindest zwei Umlenkrollen geführten Endlosband, auf dessen Außenseite eine Vielzahl von Tragvorrichtungen angeordnet sind, die an ihrem einen Ende jeweils über einen quer zur Längserstreckung des Endlosbandes verlaufenden Bolzen gelenkig am Endlosband gelagert sind und an ihrem entgegengesetzten Ende mit der benachbarten Tragvorrichtung sowohl gelenkig als auch in Längsrichtung des Endlosbandes verschieblich in Eingriff stehen.

Zum Befüllen und Verschließen einer Tube in einer Tubenfüllmaschine ist es notwendig, die Tube mittels einer Fördervorrichtung durch mehrere Arbeitsstationen zu führen, wobei die Tube üblicherweise in einem Tubenhalter aufgenommen ist, der in seinen Abmessungen an die der Tube angepaßt ist und die Tube unter enger Passung sicher trägt. Als Fördervorrichtung findet häufig ein sogenannter Ovalförderer Verwendung, der ein über zumindest zwei Umlenkrollen oder -räder geführtes Endlosband aufweist, bei dem es sich um einen Riemen, beispielsweise einen Zahnriemen, oder auch um eine Kette handeln kann. Auf der Außenseite des Endlosbandes sind eine Vielzahl von Tragvorrichtungen mit den genannten Tubenträgern montiert, die mit dem Endlosband umlaufen, wobei der Antrieb durch einen auf eine der Umlenkrollen einwirkenden Antriebsmotor erreicht wird.

Die Qualität der Füll- und Verschlußoperationen und die Funktionssicherheit bzw. die Störanfälligkeit der Tubenfüllmaschine hängen wesentlich von der Positioniergenauigkeit der Tuben in den einzelnen Arbeitsstationen ab. Somit ist es notwendig, die Tragvorrichtungen bzw. Tubenhalter sicher und mit hoher Genauigkeit auf der Außenseite des Endlosbandes zu befestigen. Dabei müssen die Tragvorrichtungen jedoch so gelagert sein, daß benachbarte Tragvorrichtungen im Umlenkbereich des Endlosbandes an den Umlenkrollen sowohl eine relative Schwenkung als auch eine geringe Verschiebung in Längsrichtung des Endlosbandes ausführen können, um das Auftreten von Zwangskräften und Zwängungsspannungen zu vermeiden.

Bei Tubenfüllmaschinen ist es bekannt, jede Tragvorrichtung am Endlosband anzubringen, indem ein Bolzen auf der Außenseite des Endlosbandes fixiert wird, der auf der Außenoberfläche des Endlosbandes senkrecht zu dessen Längserstreckung verläuft. Diesen Bolzen umgreift die Tragvorrichtung mit zwei etwa entsprechend der Breite des Endlosbandes beabstandeten Bohrungen, so daß ein Schwenklager mit zwei in Breitenrichtung des Endlosbandes beabstandeten Lagerpunkten gebildet ist. Am entgegengesetzten Ende der Tragvorrichtung ist eine einzelne gabelförmige Aufnahme ausgebildet, die den Bolzen der benachbarten Tragvorrichtung umgreift, wobei der Bolzen in der gabelförmigen Aufnahme verschieblich ist. Auf diese Weise ist ein Schubgelenk gebildet, das die Längenänderungen zwischen den Bolzen zweier benachbarter Tragvorrichtungen während der Umlenkung an den Umlenkrollen ausgleichen kann.

Es hat sich gezeigt, daß das Schubgelenk, das in der Regel aus Kunststoff besteht, im Laufe der Zeit einem hohen Verschleiß unterliegt, da es mit dem Bolzen nur über eine relativ kleine Fläche in Anlage steht, wodurch örtlich relativ hohe Belastungsspitzen auftreten können. Der Verschleiß wird noch dadurch unterstützt, daß für die Fördervorrichtung üblicherweise kein Schmiermittel verwendet wird, da die offenen Tuben aus hygienischen Gründen nicht mit Schmiermittel in Kontakt kommen dürfen. Darüber hinaus wäre der Wartungs- und Arbeitsaufwand, der zum Schmieren sämtlicher Gelenke einer entsprechenden Fördervorrichtung notwendig wäre, übermäßig hoch.

Die Lagerung der bekannten Tragvorrichtungen ist eine Dreipunktlagerung mit zwei voneinander in Querrichtung beabstandeten reinen Drehlagern an dem Bolzen und einem am entgegengesetzten Ende angeordneten Schubgelenk. Auf diese Weise ist zwar eine statisch bestimmte Lagerung gegeben, wodurch Zwängungen vermieden sind, es hat sich jedoch gezeigt, daß die räumliche Stabilität einer derartigen Lagerung in manchen Situationen nicht ausreichend ist, da die Dreipunktlagerung aufgrund ihrer asymmetrischen Anordnung der Lagerpunkte zum Verkippen um die Diagonalachse neigt, wobei der Hebelarm der Lager zur Aufnahme des Kippmomentes relativ gering ist. Auf diese Weise ist eine steife Lagerung der Tragvorrichtungen bzw. Tubenträger nicht oder nur sehr schwer zu erreichen.

Der Erfindung liegt die Aufgabe zugrunde, eine Fördervorrichtung der genannten Art zu schaffen, die eine präzise Positionierung der Tragvorrichtungen über eine lange Betriebedauer gewährleistet.

Diese Aufgabe wird erfindungsgemäß bei einer Fördervorrichtung in einer Verpackungsmaschine dadurch gelöst, daß die Tragvorrichtung mit der benachbarten Tragvorrichtung über zumindest eine Gelenklasche verbunden ist, die um eine erste Achse schwenkbar an der Tragvorrichtung und um eine dazu parallele zweite Achse schwenkbar an der benachbarten Tragvorrichtung angeschlossen ist.

Die Gelenklasche steht vorzugsweise schräg zur Längserstreckung des Förderbandes, so daß der gegenseitige Abstand zweier benachtarter Tragvorrichtungen durch Änderung der Schrägstellung der Gelenklasche ausgeglichen werden kann, ohne daß es zu Zwängungskräften führt. Darüber hinaus bleiben die benachbarten Tragvorrichtungen über die Gelenklasche relativ zueinander schwenkbar. Bei reinen Drehbewegungen liegen günstigere Reibungs- und Gleitverhältnisse als bei Schubbewegungen vor, so daß das Verschleißverhalten der Drehgelenke in den Gelenklaschen geringer als das bei dem bekannten Schubgelenk ist, wodurch die Standzeit der Fördervorrichtung wesentlich erhöht ist. Darüber hinaus ist die räumliche Stabilität insbesondere hinsichtlich des Kippverhaltens infolge der Gelenklaschen deutlich höher als bei dem Schubgelenk mit umgreifender gabelförmiger Aufnahme. Dadurch ist die Stabilität der Fördervorrichtung insgesamt erhöht, so daß sich vorbestimmte Positionen mit hoher Genauigkeit reproduzierbar einstellen lassen, was günstig für die Qualität der abgefüllten und verschlossenen Tuben ist.

In bevorzugter Ausgestaltung der Erfindung sind die benachbarten Tragvorrichtungen über jeweils zwei Gelenklaschen miteinander verbunden, so daß insgesamt für jede Tragvorrichtung eine Vierpunktlagerung erreicht ist, indem zwei beabstandete Lagerpunkte an dem Bolzen an dem einen Ende der Tragvorrichtung und zwei ebenfalls beabstandete Lagerpunkte an den beiden Gelenklaschen am anderen Ende der Tragvorrichtung vorgesehen sind. Dabei sollten die Gelenklaschen möglichst weit auseinanderliegen, was insbesondere dann erreicht ist, wenn sie jeweils nahe einer der Längskanten des Endlosbandes angeordnet sind. Durch die Vierpunktlagerung wird die Aufhängung der Tragvorrichtungen außergewöhnlich steif, so daß die Tuben mit hoher Präzision durch die Tubenfüllmaschine geführt werden können. Theoretisch ist eine Vierpunktlagerung zwar überbestimmt, in der Praxis hat sich jedoch gezeigt, daß keine Gefahr der Überlastung der Lagerung besteht, da bei heutzutage üblichen Fertigungstoleranzen die geometrische Abweichung der Lagerpunkte vom Sollwert sehr gering gehalten werden kann und andererseits durch die Elastizität des Gesamtsystems und insbesondere des Endlosbandes ausgeglichen werden kann, wodurch theoretisch mögliche Lastspitzen abgebaut werden.

Äußere Kräfte, die beispielsweise beim Einsetzen und beim Ausheben des Tubenhalters einwirken, führen bei einer Vierpunktlagerung nicht mehr zu einem seitlichen Abkippen und werden durch die Tragvorrichtung weitestgehend abgefangen, da der Hebelarm zur Aufnahme von Kippmomenten aufgrund des gegenseitigen Abstandes der Lager wesentlich größer als bei einer Dreipunktlagerung ist.

In bevorzugter Ausgestaltung ist vorgesehen, daß die Gelenklaschen bei geradlinig ausgerichten Tragvorrichtungen, d.h. im Bereich zwischen den Umlenkrollen, im wesentlichen senkrecht zur Längserstreckung des Endlosbandes ausgerichtet sind. Dadurch ist einerseits erreicht, daß benachbarte Tragvorrichtungen sehr dicht nebeneinander angeordnet sein können und die Gelenklaschen wenig Bauraum benötigen, wodurch die Anzahl der Tragvorrichtungen der Fördervorrichtung erhöht sein kann, andererseits ist sichergestellt, daß bei einer in Längsrichtung des Endlosbandes verlaufenden Relativbewegung benachbarter Tragvorrichtungen ausreichend Raum zum Ausgleich dieser Abstandsänderung durch Schrägstellung der Gelenklaschen vorhanden ist.

In bevorzugter Ausgestaltung der Erfindung ist vorgesehen, daß die zweite Achse von dem am Endlosband angebrachten Bolzen der benachbarten Tragvorrichtung gebildet ist. Da die Gelenklaschen auf diese Weise den bereits vorhandenen Bolzen der benachbarten Tragvorrichtung mitbenutzen, kann die Lagerung sehr kompakt und mit relativ wenig Bauteilen realisiert werden.

Vorzugsweise steht der Bolzen über die Tragvorrichtung hervor, so daß er in einem geradlinigen Abschnitt der Fördervorrichtung zwischen den Umlenkrollen in eine Führungsschiene eingreifen und dadurch die Tragvorrichtung sicher positionieren kann.

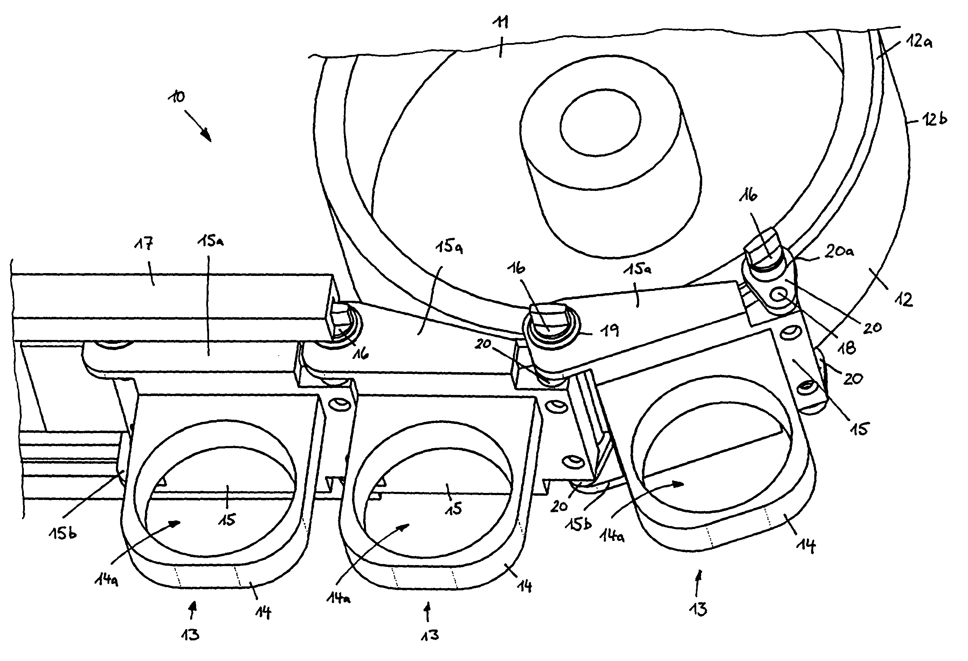

Weitere Einzelheiten und Merkmale der Erfindung sind aus der folgenden Beschreibung eines Ausführungsbeispiels unter Bezugnahme auf die Zeichnung ersichtlich, wobei die einzige Figur eine dreidimensionale Aufsicht auf eine Fördervorrichtung im Bereich einer Umlenkrolle zeigt.

Eine in der Figur dargestellte Fördervorrichtung 10 einer Tubenfüllmaschine weist ein riemenförmiges Endlosband 12 auf, das über Umlenkrollen 11 geführt ist, von denen nur eine dargestellt ist. Auf der Außenseite des Endlosbandes 12 sind eine Vielzahl von Tragvorrichtungen 13 montiert, die jeweils ein plattenartiges Basisteil 15, das parallel zur Außenseite des Endlosbandes 12 liegt, und eine von dem Basisteil 15 nach außen vorstehende Tragplatte 14 umfaßt, die eine Einsetzöffnung 14a für nicht dargestellte Tubenhalter besitzt. Am oberen und unteren Ende des Basisteils 15, d.h. nahe den Längskanten 12a und 12b des Endlosbandes 12 sind am Basisteil 15 im wesentlichen senkrecht dazu verlaufende Seitenteile 15a, 15b angeformt, so daß das Basisteil 15 zusammen mit den Seitenteilen 15a und 15b eine U-förmige Konfiguration bildet und das Endlosband 12 teilweise umgreift.

Auf der Außenseite des Endlosbandes 12 sind quer zu seiner Längserstreckung ausgerichtete Bolzen 16 in bekannter Weise befestigt, die jeweils eine Bohrung 19 in den Seitenteilen 15a und 15b durchgreifen, so daß jede Tragvorrichtung 13 um einen ihr zugeordneten Bolzen 16 schwenkbar ist, wobei das Schwenklager an einem Ende der Tragvorrichtung ausgebildet ist.

Am entgegengesetzten Ende der Tragvorrichtung 13 sind auf der Ober- und Unterseite des Basisteil 15, d.h. jeweils nahe einer der Längskanten 12a und 12b des Endlosbandes 12 Stifte 18 montiert, die parallel zu dem Bolzen 16 verlaufen und jeweils eine Gelenklasche 20 schwenkbar lagern, die darüber hinaus mit einer Bohrung 20a den Bolzen 16 der benachbarten Tragvorrichtung umgreift und auch um diesen schwenkbar ist. Auf diese Weise ist jede Tragvorrichtung 13 mittels einer Vierpunktlagerung gehalten, die sich aus den beiden Drehlagern zwischen den Seitenteilen 15a und 15b und dem Bolzen 16 sowie den beiden schwenkbar gelagerten Gelenklaschen 20 zusammensetzt. Der Bolzen 16 ragt auf der Oberseite über die Tragvorrichtung 13 hinaus und kann auf diese Weise in einem geradlinigen Abschnitt der Fördervorrichtung, d.h. in einem Abschnitt zwischen den Umlenkrollen in eine entsprechend angeordnete Führungsschiene 17 eingreifen, die ein nach unten offenes U-Profil besitzt.

Wie die Figur zeigt, sind die Führungslaschen in dem geradlinigen Abschnitt des Endlosbandes 12, d.h. abseits der Umlenkrollen 13, im wesentlichen quer zur Bewegungsrichtung ausgerichtet, so daß benachbarte Tragvorrichtungen 13 dicht aneinanderliegen. Wenn eine Tragvorrichtung in den Umlenkbereich an einer Umlenkrolle 11 eintritt, wird sie relativ zu der benachbarten Tragvorrichtung um den Bolzen 16 geschwenkt. Darüber hinaus erfolgt ein Längenausgleich in Längsrichtung des Endlosbandes 12 durch eine Schwenkung der Gelenklaschen 20 um die Stifte 18 sowie den zugeordneten Gelenkbolzen 16.

## Patentansprüche

1. Fördervorrichtung in einer Verpackungsmaschine, insbesondere einer Tubenfüllmaschine, mit einem über zumindest zwei Umlenkrollen (11) geführten Endlosband (12), auf dessen Außenseite eine Vielzahl von Tragvorrichtungen (13) angeordnet sind, die an ihrem einen Ende jeweils über einen quer zur Längserstreckung des Endlosbandes (12) verlaufenden Bolzen (16) gelenkig am Endlosband (12) gelagert sind und an ihrem entgegengesetzten Ende mit der benachbarten Tragvorrichtung (13) sowohl gelenkig als auch in Längsrichtung des Endlosbandes (12) verschieblich in Eingriff stehen, dadurch gekennzeichnet, daß die Tragvorrichtung (13) mit der benachbarten Tragvorrichtung (13) über zumindest eine Gelenklasche (20) verbunden ist, die um eine erste Achse (18) schwenkbar an der Tragvorrichtung (13) und um eine dazu parallele zweite Achse (16) schwenkbar an der benachbarten Tragvorrichtung (13) angeschlossen ist.

2. Fördervorrichtung nach Anspruch 1, dadurch gekennzeichnet, daß die Tragvorrichtung mit der benachbarten Tragvorrichtung (13) über zwei Gelenklaschen (20) verbunden ist, die jeweils nahe einer der Langskanten (12a, 12b) des Endlosbandes (12) angeordnet sind.

3. Fördervorrichtung nach Anspruch 1 oder 2, dadurch gekennzeichnet, daß die Gelenklaschen (20) bei geradlinig ausgerichteten Tragvorrichtungen (13) im wesentlichen senkrecht zur Längserstreckung des Endlosbandes (12) ausgerichtet sind.

4. Fördervorrichtung nach einem der Ansprüche 1 bis 3, dadurch gekennzeichnet, daß die zweite Achse von dem am Endlosband (12) angebrachten Bolzen (16) der benachbarten Tragvorrichtung (13) gebildet ist.

5. Fördervorrichtung nach einem der Ansprüche 1 bis 4, dadurch gekennzeichnet, daß der Bolzen (16) über die Tragvorrichtung (13 hervorsteht und in einem geradlinigen Abschnitt der Fördervorrichtung (10) in eine Führungsschiene (17) eingreift.
